# EUROPÄISCHE PATENTSCHRIFT

(11) **EP 0 621 169 B1**
(45) Veröffentlichungstag und Bekanntmachung des Hinweises auf die Patenterteilung: **02.01.1997**
(21) Anmeldenummer: 94105723.4
(22) Anmeldetag: 13.04.1994
(51) Int. Cl.: B62D 25/20

(54) **Verschlussdeckel aus Kunststoff**
Plastic closure cap
Bouchon en plastique

(30) Priorität: 23.04.1993 FR 9304838
(43) Veröffentlichungstag der Anmeldung: 26.10.1994
(73) Patentinhaber: TRW CARR FRANCE SNC, F-67340 Ingwiller (FR)
(72) Erfinder: Doré, Pascal, F-67500 Haguenau (FR); Klein, Jean-Luc René Georges, F-67350 Ringendorf (FR)
(74) Vertreter: Eder, Thomas, Dr.-Ing.

(56) Entgegenhaltungen:
- DE-B- 1 243 535
- FR-A- 1 573 251
- FR-A- 2 507 277

## Beschreibung

Die Erfindung bezieht sich auf einen Verschlußdeckel aus Kunststoff mit einer Abdeckplatte, an deren Unterseite mehrere Federfinger angeordnet sind, welche jeweils im Abstand zur Unterseite der Abdeckplatte einen eine Trägeröffnung hintergreifenden Rastbereich aufweisen.

Als Stand der Technik ist bereits ein derartiger Verschlußdeckel bekannt, welcher über den Umfang verteilt drei Federfinger aufweist (DE-OS 34 42 109). Diese Federfinger sind infolge einer zusätzlichen Abstützung relativ starr, wobei außerdem der Rastbereich kompakt gestaltet ist. Damit ist die Dichtwirkung dieses bekannten Verschlußdeckels, insbesondere bei hohen Dichtanforderungen, ungenügend.

Auch andere bekannte Verschlußdeckel (DE-GM 19 59 426, GB-PS 734 857, DE-OS 23 14 021) sind ähnlich aufgebaut und damit nicht in der Lage, eine Trägeröffnung möglichst dicht zu verschließen.

Demgegenüber liegt der vorliegenden Erfindung die Aufgabe zugrunde, einen Verschlußdeckel der eingangs genannten Art zu schaffen, mit welchem trotz einfachen Aufbaus eine verbesserte Dichtwirkung erzielt wird.

Diese Aufgabe wird erfindungsgemäß dadurch gelöst, daß jeder Federfinger aus zwei elastischen Stegen besteht, zwischen welchen ein - ebenfalls als elastischer Steg ausgebildetes - Rastelement angeordnet ist und daß das Rastelement hakenförmig gestaltet ist mit einem im Winkel zu den elastischen Stegen stehenden Anschlußbereich und dem daran anschließenden, abgewinkelten Rastbereich. Durch diese neuartige technische Konfiguration wird ein Verschlußdeckel geschaffen, dessen Federfinger zwar stabil, jedoch so elastisch sind, daß der Rastbereich den Umfang einer Trägeröffnung wirkungsvoll beaufschlagt und damit die Abdeckplatte gegen die Trägeröffnung drückt. Hierdurch ergibt sich auf einfache Weise eine verbesserte Dichtwirkung.

In weiterer Ausgestaltung der Erfindung kann der Rastbereich im Abstand parallel zu den benachbarten Stegen verlaufen. Der Anschlußbereich jedes Federfingers kann darüber hinaus spitzwinkelig zur Längsachse der Abdeckplatte angeordnet sein, wobei die Stege achsparallel zur Längsachse der Abdeckplatte verlaufen.

Zur Verbesserung der Dichtwirkung können die Federfinger im Abstand vom Außenumfang an der Unterseite der Abdeckplatte angeordnet sein, wobei zwischen dem Außenumfang und den Federfingern ein Dichtelement angeordnet ist. Dieses Dichtelement kann beispielsweise aus einem unter Wärme verformbaren Material bestehen, woraus eine zusätzliche Dichtwirkung resultiert. Weiterhin kann das Dichtelement in einer an der Unterseite der Abdeckplatte angeordneten Nut eingelagert sein.

Bei einer abgerundeten Abdeckplatte können nach einem anderen Merkmal der Erfindung die Stege der Federfinger im Querschnitt und/oder die Form der Nut der Rundung der Abdeckplatte angepaßt sein.

Um eine gleichmäßige Anpreßwirkung zu erzielen, können vorteilhafterweise mehrere Federfinger über den Umfang verteilt an die Unterseite der Abdeckplatte angeformt sein. Zur Erhöhung der Stabilität kann außerdem die Abdeckplatte an der Unterseite im Innenbereich der Federfinger einen umlaufenden Bund aufweisen, welcher beispielsweise mit Versteifungsrippen versehen ist.

Die Erfindung wird nachfolgend anhand eines in der Zeichnung dargestellten Ausführungsbeispiels näher beschrieben. In der Zeichnung zeigen:
- Fig. 1: eine Unteransicht des Verschlußdeckels;
- Fig. 2: eine Seitenansicht des Verschlußdeckel nach Fig. 1;
- Fig. 3: eine Unteransicht eines Dichtungsrings;
- Fig. 4: einen Mittelschnitt durch den Dichtungsring nach Fig. 3;
- Fig. 5: eine Unteransicht des mit dem Dichtungsring verbundenen erfindungsgemäßen Verschlußdeckels;
- Fig. 6: eine Seitenansicht des mit dem Dichtungsring verbundenen Verschlußdeckels.

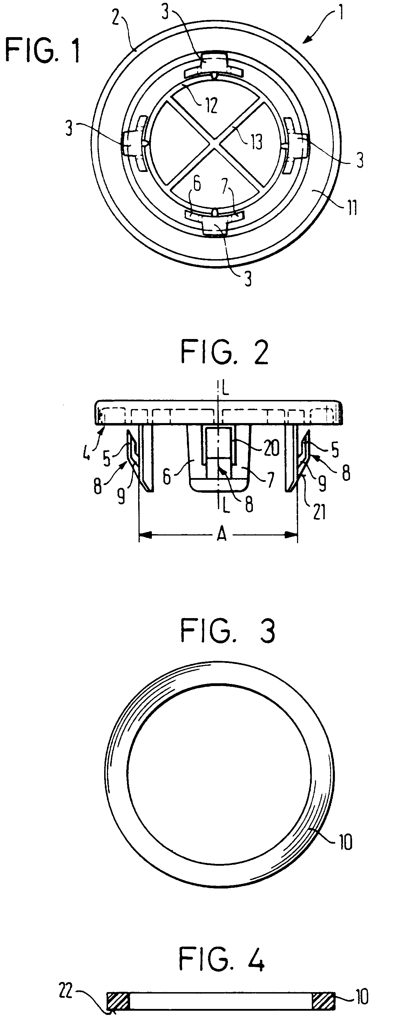

Der in Fig. 1 und 2 dargestellte Verschlußdeckel 1 aus Kunststoff besteht im wesentlichen aus einer Abdeckplatte 2, an deren Unterseite 4 mehrere Federfinger 3 angeordnet sind.

Bei dem vorliegenden Ausführungsbeispiel sind vier Federfinger 3 über den Umfang verteilt vorgesehen. Diese Federfinger weisen jeweils im Abstand zur Unterseite der Abdeckplatte einen eine nicht näher dargestellte Trägeröffnung hintergreifenden Rastbereich 5 auf.

Wie insbesondere aus Fig. 2 ersichtlich, besteht jeder Federfinger 3 aus zwei elastischen Stegen 6 und 7, zwischen welchen ein, ebenfalls als elastischer Steg ausgebildetes Rastelement 8 angeordnet ist. Dieses Rastelement 8 ist hakenförmig gestaltet und weist einen im Winkel zu den elastischen Stegen 6, 7 stehenden Anschlußbereich 9 und den daran anschließenden abgewinkelten Rastbereich 5 auf. Die Spitze des Rastbereichs 5 ist hierbei gegen die Unterseite 4 der Abdeckplatte 2 gerichtet und liegt im Abstand davon.

Aus Fig. 2 ist darüber hinaus erkennbar, daß der an dem elastischen Steg angeordnete Rastbereich 5 von einer durchgehenden Ausnehmung 20 umgeben ist. Dadurch können die jeweiligen Rastbereiche 5 bis in die Ebene der elastischen Stege 6, 7 einfedern, so daß der jeweilige Abstand A der einander gegenüberliegenden Federfinger in etwa dem Durchmesser der nicht näher dargestellten Trägeröffnung entsprechen kann.

Der Rastbereich 5 verläuft im Abstand parallel zu den benachbarten Stegen 6, 7, wohingegen der Anschlußbereich 9 jedes Federfingers 3 spitzwinkelig zur Längsachse L-L der Abdeckplatte angeordnet ist. Hierdurch läßt sich der erfindungsgemäße Verschlußdeckel leicht infolge der Schräge 21 der vier Federfinger in eine Trägeröffnung einsetzen. Aus Fig. 2 ist weiterhin erkennbar, daß die Stege 6, 7 achsparallel zur Längsache L-L der Abdeckplatte 2 verlaufen.

Die Federfinger 3 sind gemäß Fig. 1 im Abstand vom Außenumfang an der Unterseite der Abdeckplatte 2 angeordnet bzw. an diese angeformt. Zwischen dem Außenumfang der Abdeckplatte 2 und den Federfingern 3 ist eine umlaufende Nut 11 vorgesehen, welche zur Aufnahme eines als Dichtring ausgebildeten Dichtelements 10 nach Fig. 3 und 4 dient. Dieser Dichtring 10 kann aus einem unter Wärme verformbaren Material bestehen.

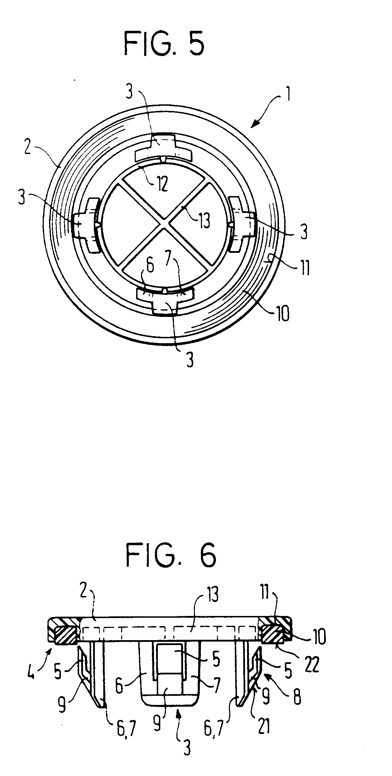

In Fig. 5 und 6 ist die zusammengebaute Einheit dargestellt: Wie ersichtlich, lagert sich das ringförmige Dichtelement 10 in der Nut 11 an der Unterseite 4 der Abdeckplatte 2 ein. Die Stirnfläche 22 des Dichtelements 10 ist hierbei gegen die Spitze des Rastbereichs 5 gerichtet.

Die Konfiguration kann nach Fig. 6 so getroffen sein, daß vor montiertem Verschlußdeckel 1 die Stirnfläche 22 außerhalb der Eingriffszone des Rastbereichs 5 liegt. Greifen dagegen die Rastbereiche 5 der vier Federfinger 3 hinter den Umfang einer nicht näher dargestellten Trägeröffnung, so sind die das Rastelement 8 bildenden elastischen Stege von den elastischen Stegen 6, 7 weggebogen, so daß sich die Spitze des jeweiligen Rastbereichs 5 unterhalb der Stirnfläche 22 des Dichtelements 10 befindet.

Um der gesamten Einheit eine zusätzliche Stabilität zu geben, kann die Abdeckplatte 2 an der Unterseite 4 den Innenbereich der Federfinger 3 einen umlaufenden Bund 12 aufweisen. Dieser umlaufende Bund 12 kann mit Versteifungsrippen 13 versehen sein.

Insgesamt ergibt sich durch die spezielle Gestaltung des erfindungsgemäßen Verschlußdeckels 1 eine einfach aufgebaute Ausführungsform, welche jedoch infolge des Einsatzes von federnden Stegen 6 und 7 und dem stegartigen Rastelement 8 mit dem anschließenden Rastbereich 5 eine sehr gute Dichtwirkung ermöglicht. Diese Dichtwirkung wird zusätzlich verbessert, wenn ein Dichtelement 10 Anwendung findet.

## Patentansprüche

1. Verschlußdeckel aus Kunststoff, mit einer Abdeckplatte an deren Unterseite mehrere Federfinger angeordnet sind, welche jeweils im Abstand zur Unterseite der Abdeckplatte einen eine Trägeröffnung hintergreifenden Rastbereich aufweisen,
dadurch gekennzeichnet,
daß jeder Federfinger (3) aus zwei elastischen Stegen (6, 7) besteht, zwischen welchen ein - ebenfalls als elastischer Steg ausgebildetes Rastelement (8) angeordnet ist und daß das Rastelement (8) hakenförmig gestaltet ist mit einem im Winkel zu den elastischen Stegen (6, 7) stehenden Anschlußbereich (9) und dem daran anschließenden, abgewinkelten Rastbereich (5).

2. Verschlußdeckel nach Anspruch 1,
dadurch gekennzeichnet,
daß der Rastbereich (5) im Abstand parallel zu den benachbarten Stegen (6, 7) verläuft.

3. Verschlußdeckel nach Anspruch 1 und 2,
dadurch gekennzeichnet,
daß der Anschlußbereich (9) jedes Federfingers (3) spitzwinkelig zur Längsachse (L-L) der Abdeckplatte (2) angeordnet ist.

4. Verschlußdeckel nach Anspruch 1 bis 3,
dadurch gekennzeichnet,
daß die Stege (6, 7) achsparallel zur Längsachse (L-L) der Abdeckplatte (2) verlaufen.

5. Verschlußdeckel nach einem der Ansprüche 1 bis 4,
dadurch gekennzeichnet,
daß die Federfinger (3) im Abstand vom Außenumfang an der Unterseite der Abdeckplatte (2) angeordnet sind und daß zwischen dem Außenumfang und den Federfingern (3) ein Dichtelement (10) angeordnet ist.

6. Verschlußdeckel nach Anspruch 4,
dadurch gekennzeichnet,
daß das Dichtelement (10) aus einem unter Wärme verformbaren Material besteht.

7. Verschlußdeckel nach Anspruch 5 und 6,
dadurch gekennzeichnet,
daß das Dichtelement (10) in einer an der Unterseite der Abdeckplatte (2) angeordneten Nut (11) eingelagert ist.

8. Verschlußdeckel nach einem der vorhergehenden Ansprüche, mit einer abgerundeten Abdeckplatte,
dadurch gekennzeichnet,
daß die Stege (6, 7) der Federfinger (3) im Querschnitt und/oder die Form der Nut (11) der Rundung der Abdeckplatte (2) angepaßt sind.

9. Verschlußdeckel nach einem der vorhergehenden Ansprüche,
dadurch gekennzeichnet,
daß mehrere Federfinger (3) über den Umfang verteilt an der Unterseite (4) der Abdeckplatte (2) angeformt sind.

10. Verschlußdeckel nach einem der vorhergehenden Ansprüche,
dadurch gekennzeichnet,
daß die Abdeckplatte (2) an der Unterseite (4) im Innenbereich der Federfinger (3) einen umlaufenden Bund (12) aufweist.

11. Verschlußdeckel nach Anspruch 10,
dadurch gekennzeichnet,
daß der Bund (12) mit Versteifungsrippen (13) versehen ist.

## Claims

1. Plastic closure cap, with a cover plate, on the underside of which are arranged several spring fingers which each have, at a distance from the underside of the cover plate, a catch region which engages behind a carrier orifice, characterized in that each spring finger (3) consists of two elastic webs (6, 7), between which a catch element (8), likewise designed as an elastic web, is arranged, and in that the catch element (8) is designed to be hook-shaped, with a junction region (9) standing at an angle to the elastic webs (6, 7) and with the angled catch region (5) adjoining said junction region.

2. Closure cap according to Claim 1, characterized in that the catch region (5) extends at a distance parallel to the adjacent webs (6, 7).

3. Closure cap according to Claims 1 and 2, characterized in that the junction region (9) of each spring finger (3) is arranged at an acute angle to the longitudinal axis (L-L) of the cover plate (2).

4. Closure cap according to Claims 1 to 3, characterized in that the webs (6, 7) extend axis-parallel to the longitudinal axis (L-L) of the cover plate (2).

5. Closure cap according to one of Claims 1 to 4, characterized in that the spring fingers (3) are arranged at a distance from the outer circumference on the underside of the cover plate (2), and in that a sealing element (10) is arranged between the outer circumference and the spring fingers (3).

6. Closure cap according to Claim 4, characterized in that the sealing element (10) consists of a heat-deformable material.

7. Closure cap according to Claims 5 and 6, characterized in that the sealing element (10) is embedded in a groove (11) arranged on the underside of the cover plate (2).

8. Closure cap according to one of the preceding claims, with a rounded cover plate, characterized in that the cross-section of the webs (6, 7) of the spring fingers (3) and/or the shape of the groove (11) are matched to the rounding of the cover plate (2).

9. Closure cap according to one of the preceding claims, characterized in that several spring fingers (3) are formed on the underside (4) of the cover plate (2) in a manner distributed over the circumference.

10. Closure cap according to one of the preceding claims, characterized in that the cover plate (2) has a peripheral rim (12) on the underside (4) in the inner region of the spring fingers (3).

11. Closure cap according to Claim 10, characterized in that the rim (12) is provided with stiffening ribs (13).

## Revendications

1. Bouchon obturateur en matière plastique, muni d'une coiffe aplatie à la face inférieure de laquelle se trouvent plusieurs doigts élastiques présentant respectivement, à distance de la face inférieure de la coiffe aplatie, une zone d'encliquetage emprisonnant par-derrière un orifice pratiqué dans un support,
caractérisé par le fait
que chaque doigt élastique (3) se compose de deux membrures élastiques (6, 7) entre lesquelles se trouve un élément encliquetable (8) - semblablement réalisé sous la forme d'une membrure élastique - ; et
par le fait que l'élément encliquetable (8) est configuré en un crochet comprenant une zone de rattachement (9), inclinée par rapport aux membrures élastiques (6, 7), et la zone coudée d'encliquetage (5) adjacente.

2. Bouchon obturateur selon la revendication 1,
caractérisé par le fait
que la zone d'encliquetage (5) s'étend parallèlement à distance des membrures voisines (6, 7).

3. Bouchon obturateur selon les revendications 1 et 2,
caractérisé par le fait
que la zone de rattachement (9) de chaque doigt élastique (3) est agencée à angle aigu par rapport à l'axe longitudinal (L-L) de la coiffe aplatie (2).

4. Bouchon obturateur selon les revendications 1 à 3,
caractérisé par le fait
que les axes des membrures (6, 7) s'étendent parallèlement à l'axe longitudinal (L-L) de la coiffe aplatie (2).

5. Bouchon obturateur selon l'une des revendications 1 à 4,
caractérisé par le fait
que les doigts élastiques (3) sont disposés, à la face inférieure de la coiffe aplatie (2), à distance du pourtour extérieur ; et par le fait qu'un élément d'étanchement (10) est interposé entre le pourtour extérieur et les doigts élastiques (3).

6. Bouchon obturateur selon la revendication 4,
caractérisé par le fait
que l'élément d'étanchement (10) consiste en un matériau thermodéformable.

7. Bouchon obturateur selon les revendications 5 et 6,
caractérisé par le fait
que l'élément d'étanchement (10) est encastré dans une saignée (11) située à la face inférieure de la coiffe aplatie (2).

8. Bouchon obturateur selon l'une des revendications précédentes, pourvu d'une coiffe aplatie arrondie,
caractérisé par le fait
que la section transversale des membrures (6, 7) des doigts élastiques (3) et/ou la forme de la saignée (11) sont adaptées à l'arrondi de la coiffe aplatie (2).

9. Bouchon obturateur selon l'une des revendications précédentes,
caractérisé par le fait
que plusieurs doigts élastiques (3) sont moulés d'un seul tenant à la face inférieure (4) de la coiffe aplatie (2), avec répartition sur le pourtour.

10. Bouchon obturateur selon l'une des revendications précédentes,
caractérisé par le fait
que la coiffe aplatie (2) présente une collerette périphérique (12) à la face inférieure (4), dans la région intérieure des doigts élastiques (3).

11. Bouchon obturateur selon la revendication 10,
caractérisé par le fait
que la collerette (12) est dotée de nervures de rigidification (13).
